# EUROPEAN PATENT SPECIFICATION

(11) **EP 0 453 389 B1**
(45) Date of publication and mention of the grant of the patent: **02.07.1997**
(21) Application number: 91500035.0
(22) Date of filing: 16.04.1991
(51) Int. Cl.: H04M 17/02

(54) **Modular public telephones management system**
Modulares System zur Verwaltung von öffentlichen Fernsprechstellen
Système modulaire de gestion de téléphones publics

(30) Priority: 19.04.1990 ES 9001113
(43) Date of publication of application: 23.10.1991
(73) Proprietor: TELEFONICA DE ESPANA, S.A., 28013 Madrid (ES)
(72) Inventor: Ibanez Palomeque, Francisco, E-28050 Madrid (ES); Mir Cepria, José, E-28013 Madrid (ES)
(74) Representative: Carpintero Lopez, Francisco

(56) References cited:
- EP-A- 0 230 283
- TELCOM REPORT vol. 13, no. 1, January 1990, München, DE, pp 28-31, XP127514; K. STER ET AL.: 'Öffentliche Kommunikation "à la carte" und "à conto"'
- IEEE COMMUNICATIONS MAGAZINE vol. 22, no. 7, July 1984, New York, USA, pp 26-31; S.B. WEINSTEIN: 'Emerging Telecommunications Needs of the Card Industry'
- COMMUTATION & TRANSMISSION, vol. 7, no. 1, April 1985, pp 71-82; M. DEMEAUTIS ET AL.: 'Le TV 200 - Un terminal Telephonique a Lecteur de Cartes'

## Description

### OBJECT OF THE INVENTION

The present invention relates to a modular public telephones management system, designed for nationwide integral management of modular public telephones, taking integral management to mean initializing the telephones, picking up alarm signals, repairing breakdowns, receiving takings and daily routines, temporary or definitive discontinued subscriptions, concurrently preparing statistical reports and reports on returns.

### FIELD OF THE INVENTION

This invention is applicable within the field of telecommunications, and is specifically intended to bring about an improvement of modular public telephone sets and of the service rendered to the users by these sets.

### BACKGROUND TO THE INVENTION

Though various systems exist nowadays that are all intended to provide a coordinated effort designed to render a given service or maintain public telephones, integral management has at no event been contemplated in the field of telephones.

In order to control the telephone service, the company must use various departments to jointly carry out the function entrusted, and no multifunctional modular public telephones management system presently exists expediting the service to be rendered to the user, and concurrently improving the actual service with the advantages derived from same.

Public telephone management systems are known, which allow to effect the call payment from a telephone by using credit cards with chip technology, but not allowing coins or credit cards issued by bank entities on said payment way.

Public telephones are known from TELCOM REPORT, vol. 13, no. 1, January 1990, MÜNCHEN, DE, pages 28-31, KÖSTER et al. "Öffentliche Kommunikation "à la carte" und "à conto", wherein the telephones are directly connected and controlled by the connection unit, the communication being effected through a data channel upon voice. The known telephone system lacks a unit which allows use of credit cards, since there is no unit to allow the information inter-change between the modular telephones and a validation and invoicing centre.

### DESCRIPTION OF THE INVENTION

The modular public telephones management system subject hereof is fully effective with a view to nationwide integral management of modular public telephones, which will no doubt bring about a noteworthy improvement in the service rendered by such public telephones, namely a greater access speed to the Switched Telephone Network and a greater number of service utilities.

The service utilities lie in the possibility now afforded by the public telephones of paying for the relevant service using various types of credit cards, such as credit, prepaid, telephone subscriber, multi-service and other like cards.

The modular public telephones management system subject hereof essentially comprises the following elements:
A.- MTs (modular public telephones).
B.- VIUs (modular public telephones validation and identification units).
C.- MTAU (modular public telephones adaptation unit).
D.- MTOS (modular public telephones operating system).
E.- VIC (modular public telephones credit cards and telephone subscriber cards validation and invoicing centre).
F.- Modular public telephones validation and identification units maintenance unit.

Communication between the different elements making up the system takes place through two different communication protocols.

The first of these protocols is used in connections through the Switched Telephone Network (STN), using a V.23 modem at 1,200 bits per second.

The second protocol is used in connections through the Switched Packages Network (IBERPAC), as X.25 at 2,400 bits per second.

The second protocol can also be used in connections through the Switched Packages Network (IBERPAC), making a real call, as X.25 and at speeds beyond those used for the aforesaid two protocols.

The modular public telephones management system has a nationwide and provincial hierarchic structure, the modular public telephones operating system (MTOS) being the highest provincial hierarchy and the modular public telephones credit cards and telephone subscriber cards validation and invoicing centre (VIC) being the highest nationwide hierarchy.

Modular public telephones (MTs) are intelligent public telephones that allow payment to be effected with coins, prepaid cards, credit cards and subscriber cards.

The modular public telephones validation and identification units (VIUs) are used for connection of the modular public telephones (MTs) thereto, and each unit can connect up to 16 modular public telephones in modules of 2 modular public telephones.

The main functions of the modular public telephones validation and identification units, i.e., the Vius, are as follows:
- To identify and authorize connection of modular public telephones to the Switched Telephone Network.
- If the terminal being identified is not a modular public telephone (MT), the validation and identification unit (VIU) prevents its connection to the Switched Telephone Network (STN).
- Call requests with credit cards are likewise validated by Vius. The VIU receives user card information from the modular public telephone (MT) and resends same to the credit cards validation and invoicing centre (VIC), that reports, after duly checking the same, to the VIU that in turn reports to the MT.

The modular public telephone (TM) and the validation and identification unit (VIU) may obviously allow or disallow the call, according to such reporting from the credit cards validation and invoicing centre (VIC).

The modular public telephones validation and identification units (VIUs) are also useful for upkeeping and maintenance purposes, among them the following:
- Teleprogramming operating parameters.
- Sending both its own daily routine reports and those deriving from the modular public telephones (MTs) connected to them.
- Reporting modular public telephones validation and identification units (VIUs) alarms.
- Concentrating messages from modular public telephones (MTs).

Modular public telephones validation and identification units (VIUs) communicate with the modular public telephones operating system (MTOS) through the Switched Telephone Network (STN) using V.23 modems at 1,200 bits per second, and with the credit cards validation and invoicing centre by using the Switched Packages Network (IBERPAC), as X.25 at 2,400 bits per second.

The modular public telephones adaptation units (MTAUs) are intended to validate credit calls from modular public telephones (MTs) that are not connected to the Switched Telephone Network (STN) through a modular public telephones validation and identification unit (VIC).

Communication with modular public telephones (MTs) takes place through the Switched Telephone Network (STN) through a V.23 modem at 1,200 bits per second, and with the credit cards validation and invoicing centres (VICs) through the Switched Packages Network (IBERPAC), as X.25 at 2,400 bits per second.

The modular public telephones adaptation units (MTAUs) are also useful for upkeeping and maintenance purposes, reporting own daily routines and alarms to the modular public telephones operating system (MTOS).

The modular public telephones adaptation units (MTAUs) can also have their own maintenance parameters teleprogrammed and are connected to the Switched Telephone Network (STN) through the special digital services line (SDSL).

Their hardware is similar to that of the modular public telephones validation and identification units (VICs), and they can be turned into the same with slight changes.

The modular public telephones operating system (MTOS) consists of two subsystems:
a.- Messages concentration unit (MCU).
b.- Central operating computer (COC).

The modular public telephones operating system manages the following provincial functions:
- Centralization of alarms reported by modular public telephones (MTs), modular public telephones validation and identification units (VIUs), and modular public telephones adaptation units (MTAUs).
- Reporting breakdowns and repairs.
- Statistical reporting.
- Teleprogramming modular public telephones (MTs), modular public telephones validation and identification units (VIUs), and modular public telephones adaptation units (MTAUs).
- Preparing and sending reports on takings to the collector firm.

Communication with modular public telephones (MTs), modular public telephones validation and identification units (VIUs), and modular public telephones adaptation units (MTAUs) takes place through the Switched Telephone Network (STN) using a V.23 modem.

Communication with the modular public telephones credit cards and telephone subscriber cards validation and invoicing centre (VIC) takes place through the Switched Packages Network, as X.25.

The modular public telephones credit cards and telephone subscriber cards validation and invoicing centre (VIC) takes care of the following throughout the country:
- Credit cards validation.
- Making an update of black lists, such comprising and setting forth doubtful customers.
- Making an update of grey lists, these comprising all customers who have used their credit, specifying each one's remaining credit.
- Receiving and generating invoicing reports for credit establishments associated to the system.

The validation and invoicing centre (VIC) communicates with the validation and identification units (VIUs) and with the modular public telephones adaptation units (MTAUs) through the Switched Packages Network (IBERPAC), as X.25.

The modular public telephones validation and identification units (VIUs) maintenance unit is a terminal comprising two modules.

One of the modules comprises a display and a keyboard, while the other unit includes the interface for connection thereof to the modular public telephones validation and identification units (VIUs) and to the modular public telephones adaptation units (MTAUs).

It is small in size and is directly connected to the said units, allowing test routines to be carried out.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the block diagram of the invention and the existing interrelation between the different blocks shown.

### PREFERRED EMBODIMENT OF THE INVENTION

In the light of this figure, it can be observed that the modular public telephones management system subject hereof comprises the modular public telephones or MTs blocks (1), the modular public telephones validation and identification units or Vius blocks (2), the modular public telephones adaptation unit or MTAU block (3), the modular public telephones operating system or MTOS blocks (4), the modular public telephones credit cards and telephone subscriber cards validation and invoicing centre or VIC block (5), and the modular public telephones validation and identification units or VIUs maintenance unit block (14).

It must be borne in mind that there is one modular public telephones operating system or MOTS block (4) for every province, while there is a single nationwide modular public telephones credit cards and telephone subscriber cards validation and invoicing centre or VIC block (5).

Communication between the different blocks making up the system takes place through two different communication protocols.

The first protocol is used in connections through the Switched Telephone Network, using a V.23 modem at 1,200 bits per second, between blocks (1) and (6), i.e., modular public telephones and the Switched Telephone Network, between (2) and (6), the public modular telephones validation and identification units and the Switched Telephone Network, between (4) and (6), i.e., between the modular public telephones operating system and the Switched Telephone Network, between (6) and (7), i.e., between the Switched Telephone Network and the special digital services line, and finally between the special digital services line and the modular public telephones adaptation unit.

The second protocol is used in connections through the Switched Packages Network or IBERPAC, as X.25 at 2,400 bits per second, between blocks (2) and (8), i.e., between the modular public telephones validation and identification units and the Switched Packages Network, between (3) and (8); i.e., between the modular public telephones adaptation unit and the Switched Packages Network, or else between (4) and (8), i.e., between the modular public telephones operating system and the Switched Packages Network.

The second protocol is also used in connections through the Switched Packages Network, by making a real call, as X.25 and at speeds beyond those used for the other two protocols between blocks (5) and (8) or, in other words, between the modular public telephones credit cards and telephone subscriber cards validation and invoicing centre and the Switched Packages Network.

The modular public telephones management system has a nationwide and provincial hierarchic structure, the modular public telephones operating system (4) being the highest provincial hierarchy and the modular public telephones credit cards and telephone subscriber cards validation and invoicing centre (5) being the highest nationwide hierarchy.

Modular public telephones (1) are intelligent public telephones that allow payment to be effected with coins, prepaid cards, credit cards and subscriber cards, as aforesaid.

The modular public telephones validation and identification units (VIUs) (2) are used for connection of the modular public telephones (1) thereto, and each modular public telephone validation and identification unit (2) can connect up to 16 modular public telephones (1) in modules of 2 modular public telephones (1) each time.

The main functions of the modular public telephones validation and identification units (2) are the following:
1.- To identify and authorize connection of modular public telephones (1) to the Switched Telephone Network (6). If the terminal being identified is not a modular public telephone (1), it prevents connection thereof to the Switched Telephone Network (6).
2.- Call requests with credit cards are validated by the validation and identification unit (2).

The VIU (2) receives user card information from the modular public telephone (1) and resends same to the credit cards validation and invoicing centre (5) that, after duly checking the same, reports to the validation and identification unit (2) that in turn reports to the modular public telephone (1).

In other words, the modular public telephone (1) and the validation and identification unit (2) may allow or disallow the call according to such reporting.

The modular public telephones validation and identification units (2) are also useful for whatever upkeeping and maintenance purposes may be necessary, among them the following:
- Teleprogramming operating parameters.
- Reporting on both its own daily routines and those deriving from the modular public telephones (1) connected to them.
- Reporting VIU (2) alarms.
- Concentrating messages from modular public telephones (1).

The validation and identification units (2) communicate with the modular public telephones operating system (4) through the Switched Telephone Network (6) using a V.23 modem at 1,200 bits per second, and with the credit cards validation and invoicing centre (5) by using the Switched Packages Network (8), as X.25 at 2,400 bits per second.

The modular public telephones adaptation unit (3) is intended to validate credit calls from modular public telephones (1) that are not connected to the Switched Telephone Network (6) through the validation and identification unit (2).

Communication with the modular public telephones (1) takes place through the Switched Telephone Network (6) through a V.23 modem at 1,200 bits per second, and with the credit cards validation and invoicing centre (5) through the Switched Packages Network (8), as X.25 at 2,400 bits per second.

The modular public telephones adaptation unit (3) is also useful for upkeeping and maintenance purposes, sending own alarm and daily routine reports to the modular public telephones operating system (4).

The modular public telephones adaptation unit (3) can also have its own maintenance parameters teleprogrammed and is connected to the Switched Telephone Network (6) through the special digital services line (7), its hardware being similar to that of the validation and identification units (2), and they can be turned into one of these with slight changes.

The modular public telephones operating system consists of two subsystems, namely:
- Messages concentration unit (MCU).
- Central operating computer (COC).

The modular public telephones operating system (4) manages the following provincial functions:
- Centralization of alarms reported by modular public telephones (1), validation and identification units (2), and modular public telephones adaptation units (3).
- Reporting breakdowns and repairs.
- Statistical reporting.
- Teleprogramming modular public telephones (1), validation and identification units (2), and modular public telephones adaptation units (3).
- Preparing and sending reports on takings to the collector firm (9).

Communication with modular public telephones (1), validation and identification units (2), and modular public telephones adaptation units (3) takes place through the Switched Telephone Network (6) using a V.23 modem at 1,200 bits per second; however, communication with the credit cards and telephone subscriber cards validation and invoicing centre (5) takes place through the Switched Packages Network (8), as X.25 at 2,400 bits per second.

The Switched Packages Network or IBERPAC (8) can be used for nationwide connection of consultation terminals (10) to the modular public telephones operating systems (4).

The credit cards validation and invoicing centre (5) takes care of nationwide validation of credit cards, but concurrently makes an update of the black lists, that comprise doubtful customers, and the grey lists, that comprise all customers who have used their credit, specifying each one's remaining credit.

Finally, the cards validation and invoicing centre (5) receives and generates invoicing reports for credit establishments (12) associated to the system, using the data processing centre (13) for such purposes, and terminals (10) provided with tape units (11).

The cards validation and invoicing centre (5) communicates with the validation and identification units (2), and with the modular public telephones adaptation units through the Switched Packages Network (8), as X.25, at 2,400 bits per second, and with the credit establishments (12) and data processing centre (13) through the same Switched Packages Network (8), as X.25 at 64Kbits per second.

The modular public telephones validation and identification units maintenance unit (14) is a terminal comprising two modules, one of which consists of a display and a keyboard, while the other includes the interface for connection thereof to the modular public telephones validation and identification units (2) and to the modular public telephones adaptation units (3).

It is small in size and is directly connected to the said units, allowing test routines to be carried out.

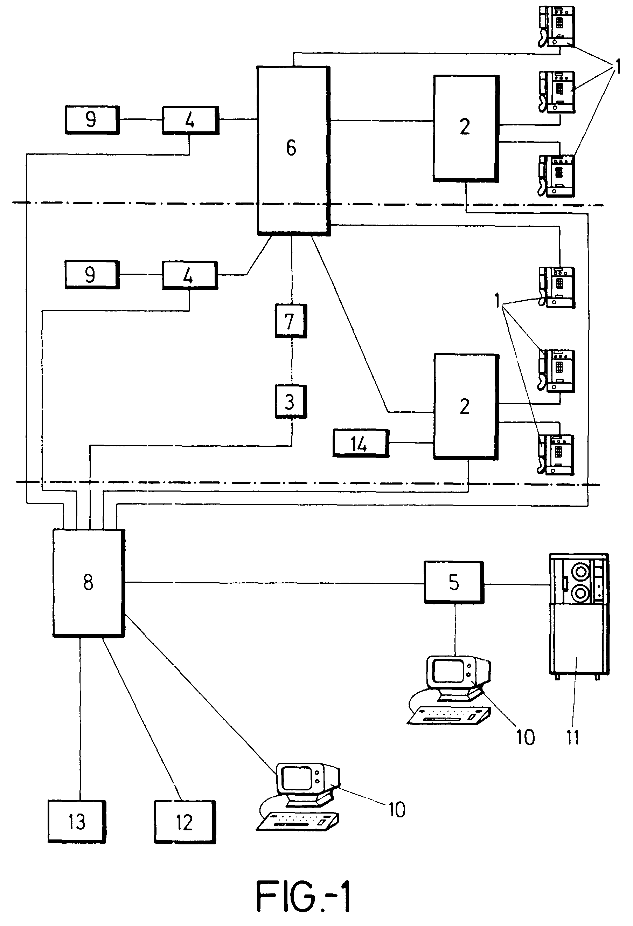

## Claims

1. Modular public telephones management system comprising a variable number of modular public telephones (1), modular public telephone validation and identification units (2), and modular public telephones adaptation units (3), as well as a provincial modular public telephones operating system (4), a modular public telephones credit cards and telephone subscriber cards validation and invoicing centre (5), and a variable number of modular public telephones validation and identification units maintenance units (14),
each of said modular public telephones (1) allowing payment to be effected with coins, prepaid cards, credit cards or subscriber cards,
a first part of said modular public telephones (1) being connected to a public switching telephone network (6) through said public telephones validation and identification units (2), a second part of said modular public telephones (1) being directly connected to the public switching telephone network (6),
said modular public telephones validation and identification units (2), modular public telephones adaptation units (3) and provincial modular public telephones operating system (4) being connected to said switched telephone network (6) communicating to each other and to said modular public telephones (1) using a first communication protocol,
said modular public telephones validation and identification units (2), modular public telephones adaptation units (3) and provincial modular public telephones operating system (4) also being connected to a switched packet network (8) for communicating with said modular public telephones credit cards and telephone subscriber cards validation and invoicing centre (5) through said switched packet network (8) using a second communication protocol,
said modular public telephones operating system (4) being the highest provincial hierarchy and said modular public telephones credit cards and telephone subscriber cards validation and invoicing centre (5) being the highest nationwide hierarchy,
whereby said modular public telephones validation and identification units (2) expedite connection of the modular public telephones (1) to the Switched Telephone Network after identifying the modular public telephone (1) and exchange information with the modular public telephones credit cards and telephone subscriber cards validation and invoicing centre (5) and the modular public telephones (1) when making calls with a credit card, in order to validate or reject such a call,
whereby said modular public telephones adaptation units (3) exchange information with the modular public telephone credit cards and telephone subscriber cards validation and invoicing centre (5) and the second group of modular public telephones (1) when making calls with a credit card, in order to validate or reject the call.

2. Modular public telephones management system, as in preceding claims, characterised in that the modular public telephones validation and identification units expedite teleprogramming of operating parameters and reporting on their own daily routines and those of the modular public telephones connected to them, as well as reporting alarms in the actual validation and identification unit and concentrating messages from modular public telephones connected to it, sending the same to the modular public telephones operating system.

3. Modular public telephones management system, as in preceding claims, characterised in that the modular public telephones operating systems manage provincial centralization of alarms reported by modular public telephones, modular public telephones validation and identification units, and modular public telephones adaptation units.

4. Modular public telephones management system, as in preceding claims, characterised in that the modular public telephones operating systems expedite provincial reporting of breakdowns and repairs, statistical reporting, teleprogramming of modular public telephones, modular public telephones validation and identification units, and modular public telephones adaptation units, preparing the reports on takings.

5. Modular public telephones management system, as in preceding claims, characterised in that the modular public telephones credit cards and telephone subscriber cards validation and invoicing centre validates credit cards, telephone subscriber cards, black and grey customers lists, receives system reports and generates invoicing reports through the country.

6. Modular public telephones management system, as in preceding claims, characterised in being provided with a small-sized maintenance unit for the modular public telephones validation and identification units, comprising a module that consists of a display and a keyboard, and another module constituting the connection interface to the modular public telephones validation and identification units and the modular public telephones adaptation unit for the execution of test routines at such units.

## Patentansprüche

1. Modulares System zur Verwaltung von öffentlichen Fernsprechstellen, das eine veränderliche Anzahl von öffentlichen modularen Fernsprechstellen (1), Einheiten zur Validierung und Identifikation (2) der öffentlichen modularen Fernsprechstellen und Anpassungseinheiten (3) für die öffentlichen modularen Fernsprechstellen sowie ein Betriebssystem (4) für öffentliche modulare Fernsprechstellen auf provinzieller Ebene, eine Validierungs- und Fakturierungszentrale (5) für Kreditkarten und Teilnehmerkarten der öffentlichen modularen Fernsprechstellen sowie eine veränderliche Anzahl von Wartungseinheiten (14) für die Validierungs- und Identifikationseinheiten der öffentlichen modularen Fernsprechstellen umfasst,
bei dem jede der öffentlichen modularen Fernsprechstellen (1) als Zahlungsmittel Münzen, im Voraus bezahlte Karten, Kreditkarten und Teilnehmerkarten annehmen und
der erste Teil der genannten öffentlichen modularen Fernsprechstellen (1) über die erwähnten Validierungs- und Identifikationseinheiten (2) der öffentlichen modularen Fernsprechstellen mit einem öffentlichen Fernsprechnetz (6) verbunden werden, während der zweite Teil der öffentlichen modularen Fernsprechstellen (1) unmittelbar am öffentlichen Fernsprechnetz (6) angeschlossen ist,
die Validierungs- und Identifikationseinheiten (2) der öffentlichen modularen Fernsprechstellen, die Anpassungseinheiten (3) für die öffentlichen modularen Fernsprechstellen und das Betriebssystem (4) der öffentlichen modularen Fernsprechstellen auf provinzieller Ebene mit dem Geschalteten Fernsprechnetz (6) und diese öffentlichen modularen Fernsprechstellen (1) unter Einsatz des ersten Verbindungsprotokolls verbunden sind,
die Validierungs- und Identifikationseinheiten (2) der öffentlichen modularen Fernsprechstellen, die Anpassungseinheiten (3) für die öffentlichen modularen Fernsprechstellen und das Betriebssystem (4) der öffentlichen modularen Fernsprechstellen auf provinzieller Ebene mit dem Geschalteten Paketnetz (8) angeschlossen werden, um über das Geschaltete Paketnetz (8), und unter Einsatz des zweiten Protokolls, die Verbindung zur erwähnten Validierungs- und Fakturierungszentrale (5) der Kreditkarten und Teilnehmerkarten der öffentlichen modularen Fernsprechstellen herzustellen,
wobei es sich bei dem Betriebssystem (4) der öffentlichen modularen Fernsprechstellen um die höchste provinzielle Hierarchie und bei der Validierungs- und Fakturierungszentrale der Kreditkarten und Teilnehmerkarten der öffentlichen modularen Fernsprechstellen um die höchste nationale Hierarchie handelt,
womit die Validierungs- und Identifikationseinheiten (2) der öffentlichen modularen Fernsprechstellen den Anschluss der öffentlichen modularen Fernsprechstellen (1) an das Geschaltete Fernsprechnetz veranlassen und das Gespräch, bei Verwendung einer Kreditkarte, nach Identifikation der öffentlichen modularen Fernsprechstelle (1) und einem Informationsaustausch mit der Validierungs- und Fakturierungszentrale (5) der Kreditkarten und Teilnehmerkarten der öffentlichen modularen Fernsprechstellen (1) zulassen oder verweigern,
dadurch gekennzeichnet, dass die Anpassungseinheiten (3) für die öffentlichen modularen Fernsprechstellen Information mit der Validierungs- und Fakturierungszentrale (5) der Kreditkarten und Teilnehmerkarten der öffentlichen modularen Fernsprechstellen und mit der zweiten Gruppe öffentlicher modularer Fernsprechstellen (1) austauschen, wenn das Gespräch mit einer Kreditkarte geführt werden soll, um dasselbe zuzulassen oder zu verweigern.

2. Modulares System zur Verwaltung von öffentlichen Fernsprechstellen, nach dem vorstehenden Anspruch dadurch gekennzeichnet, dass die Validierungs- und Identifikationseinheiten der öffentlichen modularen Fernsprechstellen die Fernprogrammierung der Betriebsparameter, die Übertragung der Tagesroutine-Berichte zulassen, sowie der eigenen als auch der der an dieselben angeschlossenen öffentlichen modularen Fernsprechstellen, sowie die Erstellung der Alarmberichte der eigenen Validierungs- und Identifikationseinheit und die Zusammenfassung der Meldungen zulassen, welche von öffentlichen modularen Fernsprechstellen kommen, die nicht angeschlossen sind, um sie an das Betriebssystem der öffentlichen modularen Fernsprechstellen weiterzuleiten.

3. Modulares System zur Verwaltung von öffentlichen Fernsprechstellen, nach den vorstehenden Ansprüchen dadurch gekennzeichnet, dass die Betriebssysteme der öffentlichen modularen Fernsprechstellen die Zentralisierung der von den öffentlichen modularen Fernsprechstellen, Validierungs- und Identifikationseinheiten der öffentlichen modularen Fernsprechstellen und Anpassungseinheiten für öffentliche modulare Fernsprechstellen kommenden Meldungen auf provinzieller Ebene vornehmen.

4. Modulares System zur Verwaltung von öffentlichen Fernsprechstellen, nach den vorstehenden Ansprüchen dadurch gekennzeichnet, dass die Betriebssysteme der öffentlichen modularen Fernsprechstellen auf provinzieller Ebene die Erstellung von Störungs- und Reparaturberichten, die Erstellung statistischer Berichte, die Fernprogrammierung der öffentlichen modularen Fernsprechstellen, Validierungs- und Identifikationseinheiten der öffentlichen modularen Fernsprechstellen und der Anpassungseinheiten für öffentliche modulare Fernsprechstellen ermöglichen und Inkassoberichte erstellen.

5. Modulares System zur Verwaltung von öffentlichen Fernsprechstellen, nach den vorstehenden Ansprüchen dadurch gekennzeichnet, dass die Validierungs- und Fakturierungszentrale die Kreditkarten und Teilnehmerkarten der öffentlichen modularen Fernsprechstellen, schwarzen und grauen Kundenlisten validieren, Auskünfte vom System erhalten und Abrechnungen erstellen.

6. Modulares System zur Verwaltung von öffentlichen Fernsprechstellen, nach den vorstehenden Ansprüchen dadurch gekennzeichnet, dass es eine Wartungseinheit geringer Grösse für die Validierungs- und Identifikationseinheiten der öffentlichen modularen Fernsprechstellen aufweist, die aus einem Modul besteht, welches eine Anzeige und eine Tastatur enthält, und ein weiteres Modul umfasst, das die Schnittstelle zum Anschluss an die Validierungs- und Identifikationseinheiten der öffentlichen modularen Fernsprechstellen und an die Anpassungseinheit für öffentliche modulare Fernsprechstellen bildet, um die Testroutinen an diesen Einheiten durchzuführen.

## Revendications

1. Système modulaire de gestion de téléphones publics qui comprend un nombre variable de téléphones publics à système modulaire (1), des unités de confirmation et d'identification (2) de téléphones publics à système modulaire et d'unités d'adaptation (3) de téléphones publics à système modulaire, ainsi qu'un système opérationnel (4) de téléphones publics à système modulaire provinciaux, un centre de confirmation et de facturation (5) de cartes de crédit et de cartes d'abonnés téléphoniques de téléphones publics à système modulaire , et un nombre variable d'unités de maintenance (14) des unités de confirmation et d'identification de téléphones publics à système modulaire, chacun de ces téléphones publics à système modulaire (1) permettant que le paiement soit effectué avec des pièces, des cartes payées au préalable, des cartes de crédit ou des cartes d'abonné, une première partie de ces téléphones publics à système modulaire étant connectée à un réseau téléphonique public de commutation (6), à travers ces unités de confirmation et d'identification (2) des téléphones publics, une deuxième partie de ces téléphones publics à système modulaire (1) étant connectée directement au réseau téléphonique public de commutation (6), ces unités de confirmation et d'identification (2) des téléphones publics à système modulaire, les unités d'adaptation (3) des téléphones publics à système modulaire et le système opérationnel (4) de téléphones publics à système modulaire provinciaux étant connectés à ce réseau téléphonique commuté (6) et ces téléphones publics à système modulaire (1) étant en communication à l'aide de l'utilisation d'un premier protocole de communications, les unités d'identification et de confirmation (2) de téléphones publics à système modulaire et le système opérationnel (4) de téléphones publics à système modulaire provinciaux étant connectés également à un réseau (8) de paquets commutés pour communiquer avec ce centre de confirmation et de facturation (5) de cartes de crédit et de cartes d'abonnés téléphoniques de ces téléphones publics à système modulaire, à travers ce réseau (8) de paquets commutés, à l'aide de l'utilisation d'un deuxième protocole de communications, ce système opérationnel (4) de téléphones publics à système modulaire étant de la plus haute hiérarchie provinciale, et ce centre de confirmation et de facturation de cartes de crédit et de cartes d'abonnés téléphoniques des téléphones publics à système modulaire étant de la plus haute hiérarchie au niveau de la nation, à travers lequel, ces unités de confirmation et d'identification (2) de téléphones publics à système modulaire activent la connexion des téléphones publics à système modulaire (1) au réseau téléphonique commuté, après avoir identifié le téléphone public à système modulaire (1) et elles échangent des renseignements avec le centre de confirmation et de facturation (5) de cartes de crédit et de cartes d'abonnés téléphoniques des téléphones publics à système modulaire et les téléphones publics à système modulaire (1) lorsque des appels sont effectués avec une carte de crédit, afin de confirmer ou de refuser cet appel, caractérisé par le fait que ces unités d'adaptation (3) de téléphones publics à système modulaire échangent des renseignements avec le centre de confirmation et de facturation (5) de cartes de crédit et de cartes d'abonnés téléphoniques de téléphones publics à système modulaire et avec le deuxième groupe de téléphones publics à système modulaire (1) lorsque des appels sont réalisés avec une carte de crédit, afin de confirmer ou de refuser l'appel.

2. Système modulaire de gestion de téléphones publics, selon les revendications précédentes, caractérisé par le fait que les unités de validation et d'identification de téléphones publics à système modulaire facilitent la téléprogrammation de paramètres de fonctionnement et d'envoi de rapports de routine quotidienne aussi bien propres que des téléphones publics à système modulaire qui y sont connectés, ainsi que la production de rapport d'alarmes de la propre unité de validation et d'identification et la concentration de messages provenant des téléphones publics à système modulaire qui y sont connectés et envoi de ces derniers au système d'exploitation de téléphones publics à système modulaire.

3. Système modulaire de gestion de téléphones publics, selon les revendications précédentes, caractérisé par le fait que les systèmes d'exploitation de téléphones publics à système modulaire gèrent au niveau provincial la centralisation de rapports d'alarmes provenant de téléphones publics à système modulaire, des unités de validation et d'identification de téléphones publics à système modulaire et des unités d'adaptation de téléphones publics à système modulaire.

4. Système modulaire de gestion de téléphones publics, selon les revendications précédentes, caractérisé par le fait que les systèmes d'exploitation de téléphones publics à système modulaire facilitent au niveau provincial la production de rapports de pannes et de réparation, la production de rapports statistiques, la téléprogrammation de téléphones publics à système modulaire, des unités de validation et d'identification de téléphones publics à système modulaire et des unités d'adaptation de téléphones publics à système modulaire, en confectionnant les rapports d'encaissement.

5. Système modulaire de gestion de téléphones publics, selon les revendications précédentes, caractérisé par le fait que le centre de validation et de facturation de cartes de crédits et de cartes d'abonnés téléphoniques de téléphones publics à système modulaire valident au niveau national, les cartes de crédit, les cartes d'abonnés téléphoniques, les listes noires et grises de clients, reçoit des rapports du système et engendre les rapports de facturation.

6. Système modulaire de gestion de téléphones publics, selon les revendications précédentes, caractérisé par le fait d'être doté d'une unité de maintenance des unités de validation et d'identification de téléphones publics à système modulaire de petite dimension, composée d'un module qui comprend un visualisateur et un clavier, et d'un autre module qui constitue l'interface de connexion aux unités de validation et d'identifications de téléphones publics à système modulaire et à l'unité d'adaptation de téléphones publics à système modulaire pour la réalisation de routines d'essai dans ces unités.
